# EUROPÄISCHE PATENTSCHRIFT

(11) **EP 0 587 986 B1**
(45) Veröffentlichungstag und Bekanntmachung des Hinweises auf die Patenterteilung: **27.11.1996**
(21) Anmeldenummer: 93107432.2
(22) Anmeldetag: 07.05.1993
(51) Int. Cl.: F16F 15/02, F16F 13/00, F16F 1/44, B60G 17/015

(54) **Aktives Stellelement**
Active actuator
Dispositif de positionnement actif

(30) Priorität: 15.09.1992 DE 4230800
(43) Veröffentlichungstag der Anmeldung: 23.03.1994
(73) Patentinhaber: Firma Carl Freudenberg, D-69469 Weinheim (DE)
(72) Erfinder: Kurr, Klaus, Dr., W-6940 Weinheim (DE); Röhner, Gerhard, W-6944 Hemsbach (DE); Eckel, Hans-Gerd, Dr., W-6947 Laudenbach (DE); Burger, Stefan, W-6940 Weinheim (DE)

(56) Entgegenhaltungen:
- DE-A- 3 509 000
- DE-A- 4 116 270
- FR-A- 2 642 489
- FR-A- 2 642 493
- US-A- 3 957 127

## Beschreibung

Die Erfindung betrifft ein aktives Stellelement, nach dem Oberbegriff des Anspruchs 1.

Ein aktives Stellelement der im Oberbegriff des Anspruchs 1 angegebenen Art ist aus DE-A-4 116 270 bekannt.

Aus DE-B 39 18 753 ist ein Stellelement bekannt, bei dem die Verformungseinheit durch eine Flüssigkeit gebildet, wird die in einem überwiegend nach außen abgeschlossenen Raum enthalten ist. Das Stellelement dient primär der elastischen Lagerung von Aggregaten und kann nur unter bestimmten Umständen Stellfunktionen erfüllen, weil der Raum, in dem die Flüssigkeit enthalten ist, in ausgedehnten Anteilen seiner Begrenzungsfläche von nachgiebigen Wänden begrenzt und durch eine Dämpfungsöffnung mit einem Ausgleichsraum verbunden ist. Uber die Flüssigkeit können dadurch nur dann Kräfte von dem Stellglied auf das Arbeitsglied übertragen werden, wenn das Stellglied in eine so schnelle Hin- und Herbewegung versetzt wird, daß das in dem Raum und der Dämpfungsöffnung enthaltene Flüssigkeitsvolumen infolge seiner Trägheitsmasse den Hin- und Herbewegungen zumindest nicht mehr in synchroner Weise zu folgen vermag mit dem Ergebnis, daß die Flüssigkeit als in einem nach außen mehr oder weniger abgeschlossenen Raum konstanten Volumens betrachtet werden kann. Es besteht dann die Möglichkeit, über die Flüssigkeit Kräfte von dem Stellglied auf das Arbeitsglied zu übertragen, was zur aktiven Isolierung akustisch störender Schwingungen benutzt wird. Bei Einleitung von Schwingungen einer niedrigeren Frequenz ist solches nicht mehr möglich. Sie werden bei der vorbekannten Bauform durch Atmungsbewegungen der den Raum begrenzenden Gummiwände passiv isoliert bzw. zur Unterdrückung amplidudenüberhöhter Schwingungsausschläge beim Hindurchpressen von Flüssigkeitsbestandteilen durch die Dämpfungsöffnung hydraulisch gedämpft. Die Herstellung und Verwendung eines solchen Stellelementes ist außerdem durch die Verwendung einer Flüssigkeit als Funktionselement besonders belastet, weil die Einbringung der Flüssigkeit in den Raum und dessen Abdichtung eines besonderen Aufwandes bedürfen und weil es die physikalischen Eigenschaften der zur Verfügung stehenden Flüssigkeiten zumeist erfordern, der elektrischen Isolierung der stromführenden Teile des Stellgliedes sowie der thermisch isolierten Anbringung des Stellelementes besondere Aufmerksamkeit zu widmen.

Der Erfindung liegt die Aufgabe zugrunde, ein Stellelement bereitzustellen, welches die Übertragung von Kräften derart gestaltet, daß sie nicht mehr an das Vorliegen von Hin- und Herbewegungen einer bestimmten Frequenz gekoppelt ist. Darüber hinaus soll das Stellelement wesentlich einfacher herzustellen und zu verwenden sein als die vorbekannte Ausführung.

Diese Aufgabe wird mit den Merkmalen von Anspruch 1 gelöst. Auf vorteilhafte Ausgestaltungen nehmen die Unteransprüche Bezug.

In dem erfindungsgemäßen Stellelement ist das Stellglied durch ein Piezoelement in Richtung des Raumes hin- und herbewegbar. Das Piezoelement läßt sich durch Anlegen einer elektrischen Spannung in Richtung des Raumes in seiner Länge verändern, wobei aufgrund der hohen Leistungsdichte große Kräfte auf die Verformungseinheit übertragen werden können.

Dadurch, daß Piezoelemente bei einer Aktivierung nur geringe Formänderungen ausführen, ist es bevorzugt vorgesehen, daß das Stellglied an die Verformungseinheit mit einer hydraulisch wirksamen Fläche angrenzt, die größer ist als die entsprechende hydraulisch wirksame Fläche des Arbeitsgliedes. Das Flächenverhältnis überträgt sich bei einer Aktivierung des Stellgliedes maßstäblich auf die Größe der Relativbewegung des Arbeitsgliedes, was es ermöglicht, die Bewegungsamplitude in Abhängigkeit von den jeweiligen Gegebenheiten des Anwendungsfalles auf optimale Werte festzulegen. Im Bereich des allgemeinen Maschinenbaus hat es sich als vorteilhaft bewährt, wenn ein Flächen- und Hubverhältnis von etwa 1/10 zur Anwendung gelangt. Die Funktion entspricht im wesentlichen den Verhältnissen eines hydraulischen Kolbensystems.

Um den Verstellweg des Stellgliedes zu vergrößern, können zumindest zwei in der Bewegungsrichtung des Stellgliedes aufeinandergeschichtete Piezoelemente vorgesehen sein. Die Anzahl der Piezoelemente bestimmt die Größe der Bewegung des Stellgliedes in Bewegungsrichtung.

Im Hinblick auf eine einfachere und wirtschaftlich günstigere Herstellbarkeit und Verwendung kann es vorgesehen sein, daß die Verformungseinheit vollständig aus einem Elastomer besteht. Hierbei ist von Vorteil, daß das elektrisch betätigbare Stellglied nicht abgedichtet zu werden braucht, daß sich eine Vereinfachung hinsichtlich der elektrischen Isolierung der stromführenden Teile des Stellgliedes ergibt und daß es vielfach entbehrlich ist, der thermisch isolierten Aufstellung des Stellelementes gegenüber wärmeabgebenden Teilen in der Umgebung die bisherige Aufmerksamkeit zu widmen.

Eine einfache, wirtschaftlich günstige Herstellbarkeit kann dadurch bewirkt werden, daß das Elastomer und das Stützgehäuse einstückig miteinander verbunden sind. Zusätzlich wird hierdurch die Entstehung von funktionsbeeinträchtigenden Hohlräumen zwischen dem Elastomer und dem Stützgehäuse unterdrückt.

Nach einer weiteren vorteilhaften Ausgestaltung können das Elastomer und das Arbeitsglied alternativ oder ergänzend einstückig verbunden sein. Hierbei ist ist es insbesondere im letztgenannten Fall von Vorteil, daß Querkräfte und Biegemomente, die auf das Arbeitsglied einwirken, nicht auf das Stellglied übertragen werden können.

Elastomer und das Stellglied können ebenfalls einstückig miteinander verbunden sein. Das Stellglied wird über elektrische Anschlüsse des Piezoelementes angesteuert.

Der von den Elastomerschichten freie Teil des Raums der Verformungseinheit kann bedarfsweise auch durch eine Flüssigkeit, wie Wasser, gebildet sein, dem ein Gehalt an einem Frostschutzmittel zugesetzt ist. Die Verformung ist in diesem Falle nicht mit den Dämpfungsverlusten des Gummis der vorstehend beschriebenen Ausführungen verbunden. Die Ausführung eignet sich dadurch für Anwendungen, in denen es in besonders hohem Maße auf die Vermeidung von Dämpfungsverlusten ankommt.

Die Elastomerschichten können auf adhäsive Weise an den einander gegenüberliegenden Oberflächen festgelegt sein, beispielsweise durch unmittelbares Anvulkanisieren. Der die Flüssigkeit enthaltende Raum muß im übrigen hermetisch nach außen abgeschlossen sein.

Besteht die Verformungseinheit demgegenüber vollständig aus einem elastomeren Werkstoff, beispielsweise aus Gummi, dann kann das unnachgiebige Gehäuse gegebenenfalls eine Wandung haben, die in Teilbereichen Durchbrechungen aufweist oder das Stellglied nichtanliegend berührt. Die flächenmäßige Ausdehnung solcher Teilbereiche muß jedoch so klein bemessen sein, daß die sich in ihnen bei einer Verformung ergebende Atmungsbewegung des Stellgliedes das vorstehend erwähnte, hydraulische Funktionsprinzip nicht stört. Ist diese Bedingung gewährleistet, dann kann eine solche Ausbildung des Gehäuses die Erzielung einer wesentlichen Gewichtsersparnis ermöglichen.

Ein entsprechend gestaltetes Gehäuse kann beispielsweise aus einem unnachgiebigen Drahtgitter oder einem metallischen Gitterrohr bestehen.

Das erfindungsgemäße Stellelement kann in vielfältigen Anwendungen eingesetzt werden. Es kann beispielsweise in einem Schwingungstilger zur Anwendung gelangen.

Es besteht auch die Möglichkeit, eine Trägheitsmasse, die durch das Gehäuse gebildet sein kann, unter Verwendung des Stellelementes derart mit einem schwingenden Körper zu verbinden, daß die Trägheitsmasse aktiv in eine zu dem Körper gegenphasige Relativbewegung versetzt wird. Die Bewegungen des Körpers lassen sich hierdurch bereits bei ihrer Entstehung nach Art von Tilgereffekten und weitgehend frequenzunabhängig vermindern. Die erforderlichen elektrischen Sensoren und Steuerungen sind bekannt und nicht Gegenstand der vorliegenden Anmeldung.

Gummilager neigen bekanntlich dazu, hochfrequente Schwingungen, beispielsweise akustisch störende Schwingungen, weniger gut zu isolieren als tieffrequente Schwingungen. Die Isolierung hochfrequenter Schwingungen, beispielsweise schallerregender Schwingungen, von einem Gummilager ist daher ganz besonders vorteilhaft. Es ist in diesem Sinne möglich, das erfindungsgemäße Stellelement mit einem Gummilager in einer Reihenschaltung anzuordnen und derart zu betreiben, daß Schwingungen einer bestimmten Frequenz und Amplitude das Gummilager nicht erreichen. Hierzu ist es erforderlich, das Stellelement in eine, bezogen auf die aufzunehmenden Schwingungen, gleichphasige Bewegung zu versetzen. Die dazu erforderlichen Sensoren und Schaltungen sind bekannt. Die bisher zu diesem Zweck vorgeschlagenen, elektromagnetischen Antriebe des Auflagers ermöglichen aber nicht die Übertragung der im allgemeinen Maschinenbau erforderlichen Kräfte und sind darüberhinaus für die Isolierung solcher Schwingungen wesentlich zu träge. Erst die erfindungsgemäße Ausführung schafft hier Abhilfe.

Das erfindungsgemäße Stellelement zeichnet sich durch eine gute Alterungsbeständigkeit aus und läßt sich als wegeinstellendes und kräfteregulierendes Bauteil in statischen und dynamischen Anwendungen gleichwertig benutzen. Die Anwendungsbreite wird dabei, frequenzmäßig ausgedrückt, durch 0 und 5 kHz begrenzt.

Das erfindungsgemäße Stellelement kann in konstruktiver Hinsicht modulhaft gestaltet werden, was die konstruktive Anpassung an besondere Gegebenheiten des Anwendungsfalles vereinfacht und es beispielsweise ermöglicht, das Stellelement ohne besonderen Aufwand in Verbindung mit gedämpften oder ungedämpften Gummilagern oder Tilgern zu verwenden.

Das Stellelement wird nachfolgend anhand der in der Anlage beigefügten Zeichnungen weiter erläutert. Es zeigen:

Fig.1 eine erste Ausführung des erfindungsgemäßen Stellelementes in längsgeschnittener Darstellung, bei der ein Arbeitsglied und ein Stellglied vorgesehen sind.

Fig.2 eine Ausführung ähnlich den in Fig.1 gezeigten, bei der ein einziges Stellglied und zwei quer zur Bewegungsrichtung des Stellgliedes einander gegenüberliegende und nur gegenläufig bewegbare Arbeitsglieder vorgesehen sind.

Fig.3 eine Ausführung ähnlich der in Fig.1 gezeigten, wobei die Verformungseinheit durch eine Flüssigkeit oder Paste gebildet ist.

Fig.4 eine Ausführung, die in Verbindung mit einem Gummilager zur Anwendung gelangt.

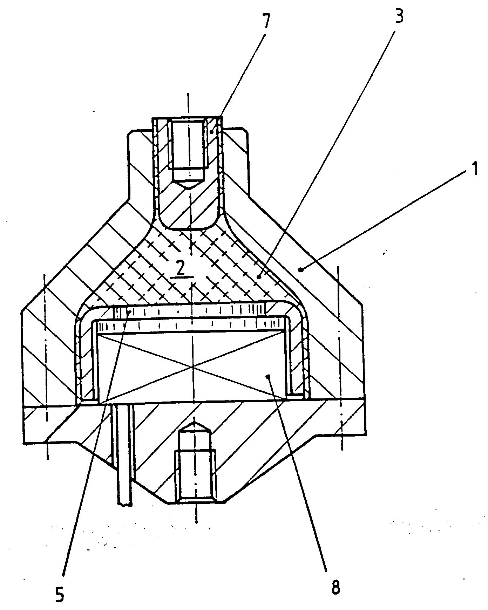

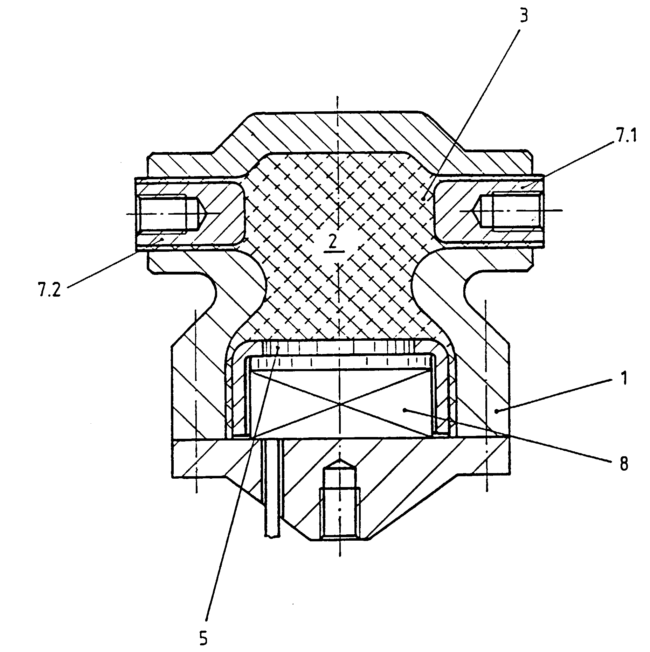

In den Fig.1 und 2 ist jeweils ein Ausführungsbeispiel eines aktiven Stellelements gezeigt, wobei in einem Stützgehäuse 1, bevorzugt aus metallischem Werkstoff, eine im wesentlichen nicht komprimierbare Verformungseinheit 3 aus einem elastomeren Werkstoff einer Härte Shore A von 50 angeordnet ist, die das Stützgehäuse 1 vollständig ausfüllt. Die Härte kann bedarfsweise im Bereich von 30 bis 80 Shore A variiert sein. Der elastomere Werkstoff umschließt sowohl die Arbeitsglieder 7, 7.1, 7.2 als auch das Stellglied 5, das durch ein elektrisch ansteuerbares Piezoelement 8 bewegbar ist. Die an der Verformungseinheit anliegende, hydraulisch wirksame Oberfläche des Stellgliedes 5 ist etwa 10-mal so groß wie die entsprechende Fläche des Arbeitsgliedes 7 bzw. der Arbeitsglieder 7.1 und 7.2. Eine achsparallele Relativbewegung des Stellgliedes 5 hat hierdurch eine achsparallele Relativbewegung des Arbeitsgliedes 7 in gleicher Richtung zur Folge, die etwa um das 10-fache größer ist und in bezug auf die Arbeitsglieder 7.1 und 7.2, die etwa um das 5-fache größer ist als die eigene Bewegung. Die sich beim Anlegen an das Piezoelement 8 ergebende Relativverlagerung des Stellgliedes 5 wird dadurch in eine technisch interessante Größenordnung angehoben.

Sie kann durch die Verwendung von zumindest zwei in Achsrichtung aufeinandergeschichtete Piezoelemente weiter vergrößert werden.

Bei dem in Fig.2 dargestellten Ausführungsbeispiel ist die Bewegungsrichtung des elektrisch betätigbaren Stellgliedes 5 der Bewegungsrichtung der beiden Arbeitsglieder 7.1, 7.2 senkrecht zugeordnet. Die beiden Arbeitsglieder sind bei einer ineinanderübergehenden Bewegungsachse einander gegenüberliegend angeordnet und gegensinnig bewegbar. Durch das Stellelement lassen sich dadurch nach Ankopplung der Arbeitsglieder an einandergegenüberliegende, körperliche Strukturen Kräfte und gegebenenfalls Schwingungen in die Strukturen einleiten, was es z. B. ermöglicht, unter Ausnutzung von Interferenzeffekten eine Auslöschung oder Minimierung von dadurch übertragenem Körperschall zu erzielen. Vorgegebene Gesamtschwingungen solcher Strukturen lassen sich auf solche Weise zumindest im Bereich wichtiger Stellen ganz beseitigen oder minimieren. In bezug auf eine Unterdrückung der Übertragung von Körperschall und damit in Hinblick auf eine Verbesserung des Komforts in Kraftfahrzeugen ist das von großem Vorteil.

Die beiden in den Fig.1 und 2 dargestellten Ausführungsbeispiele können in verschiedenen Anwendungsbereichen Verwendung finden. So besteht beispielsweise die Möglichkeit, das in Fig.1 gezeigte Stellelement mit einem hydraulisch dämpfenden Motor- oder Achslager in einer Reihenschaltung oder Parallelschaltung zusammenzufassen und das so erhaltene Lager zwischen einer Verbrennungskraftmaschine bzw. einer Achse und der Karosserie eines Kraftfahrzeuges anzuordnen, um hochfrequente Schwingungen, die beipielsweise durch die Verbrennungskraftmaschine oder den Fahrbahnbelag angeregt werden, aktiv zu isolieren.

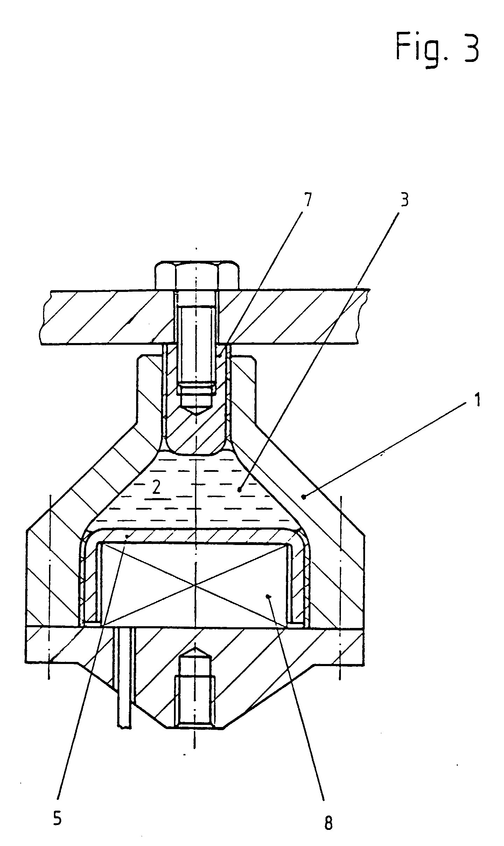

In Fig.3 ist ein Schwingungstilger gezeigt. Das Gehäuse 1 des Stellelementes ist als Tilgermasse gestaltet, die durch das Arbeitsglied bewegbar ist. Das Stellelement wird so bewegt, daß sich, bezogen auf die Relativbewegung des Körpers, eine gegenphasige Bewegung ergibt. Diese gegenphasige Bewegung läßt sich in einem beliebig großen Frequenzbereich sowie bei transienten Relativbewegungen des Körpers erzielen und beginnend mit ihrer Entstehung zur Unterdrückung störender Relativbewegungen nutzen. Die Verformungseinheit 3 wird bei der gezeigten Ausführung durch eine Flüssigkeit gebildet. Die Flüssigkeit ist in dem Raum 2 flüssigkeitsdicht eingeschlossen. Sie kann auch durch eine Gummifüllung des Gehäuses 1 ersetzt sein.

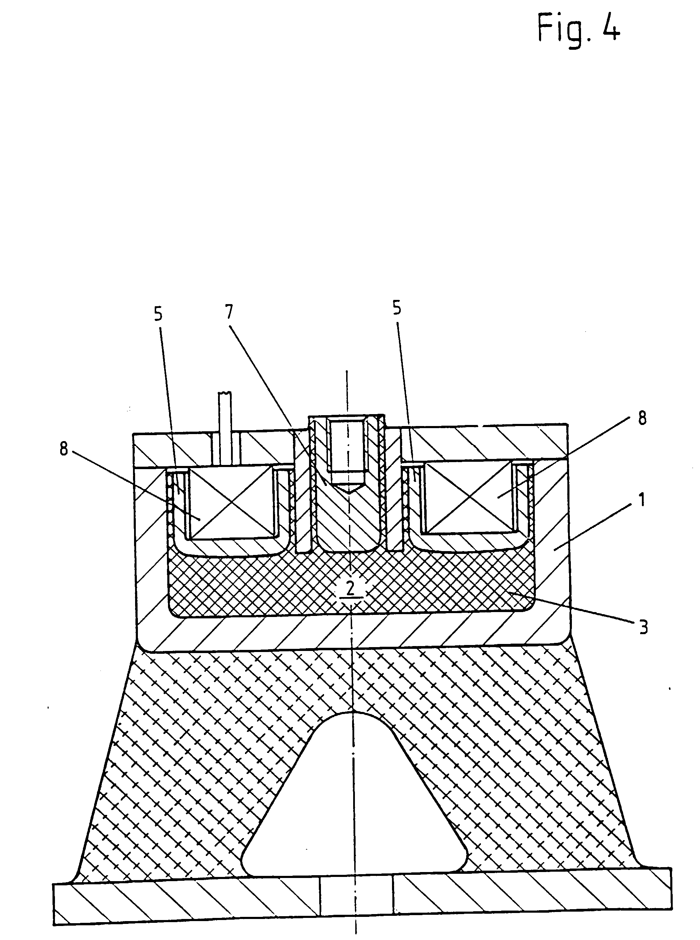

Fig.4 zeigt eine Anwendung, in der das Stellelement mit einem Gummilager in einer Reihenschaltung zusammengefaßt ist. Es dient primär dazu, hochfrequente Schwingungen, beispielsweise schallerregende Schwingungen, von dem Gummilager fernzuhalten und zu isolieren. Zu diesem Zweck sind mehrere Stellglieder 5 vorgesehen, die gleichmäßig in Umfangsrichtung um das Arbeitsglied 7 verteilt sind und die gleichphasig mit der erregenden Schwingung aktiviert werden. Bei einer Aktivierung nur eines Piezoelementes ergibt sich eine etwa gleich große Relativverschiebung des Arbeitsgliedes 7 in entgegengesetzter Richtung. Die diesbezügliche Amplitude läßt sich dadurch vergrößern, daß zwei oder noch mehr Piezoelemente 8 synchron zueinander aktiviert werden, wobei die einzelnen Piezoelemente sowohl in Umfangsrichtung aufeinanderfolgend angeordnet sein können als auch bei einem geschichteten Aufbau unmittelbar aufeinanderliegend. In Abhängigkeit von der Anzahl der gleichzeitig aktivierten Piezoelemente läßt sich hierdurch die Amplitude des Arbeitsgliedes 7 in breitem Rahmen modifizieren und an die besonderen Gegebenheiten des Anwendungsfalles anpassen. Es kann auch ein ringförmiges Stellglied zur Anwendung gelangen, das das Arbeitsglied rotationssynchronisch umschließt.

Durch die geringe Bauhöhe bietet sich das in Fig.4 gezeigte Stellelement insbesondere zur Verwendung in Verbindung mit Gummilagern an, wobei diese bedarfsweise auch mit einer hydraulischen Dämpfungseinrichtung versehen sein können. Sie ermöglichen bei einer solchen Verwendung eine gute Isolierung des Gummilagers in bezug auf die Einleitung von akustisch störenden Schwingungen, beispielsweise der Schwingungen einer Verbrennungskraftmaschine. Insbesondere diese Schwingungen können sich an einem Kraftfahrzeug äußerst störend bemerkbar machen. Ausführungen der in Fig.4 gezeigten Art eignen sich durch diese Verwendungsmöglichkeit, durch die erhöhte Funktionssicherheit sowie durch ihr geringes Gewicht und ihre geringen Abmessungen besonders gut für eine Anwendung im Bereich der Motorlagerung von Kraftfahrzeugen.

## Patentansprüche

1. Aktives Stellelement mit einem von einem unnachgiebigen Stützgehäuse (1) umschlossenen Raum (2), der durch eine im wesentlichen inkompressible Verformungseinheit (3) vollständig ausgefüllt ist, wobei der Raum (2) an einer ersten Stelle durch zumindest ein elektrisch betätigbares Stellglied (5) und an einer zweiten Stelle durch zumindest ein Arbeitsglied (7) begrenzt ist, wobei das Stell- und das Arbeitsglied (5, 7) in Richtung des Raumes (2) hin- und herbewegbar sowie gegenüber dem Stützgehäuse (1) abgedichtet sind, die Verformungseinheit (3) das Arbeitsglied (7) umschließt, das Stellglied (7) durch ein Piezoelement (8) in Richtung des Raumes hin- und herbewegbar ist, und an die Verformungseinheit (3) mit einer hydraulisch wirksamen Fläche angrenzt, die größer als die entsprechende hydraulisch wirksame Fläche des Arbeitsgliedes (7) ist, **dadurch gekennzeichnet**, daß die Verformungseinheit (3) das Stellglied (5) umschließt, und der Teil des Raumes (2) im Stützgehäuse (1), in dem die Verformungseinheit (3) das Arbeitsglied (7) und das Stellglied (5) umschließt, mit einer Elastomerschicht derart ausgefüllt ist, daß das Arbeitsglied (7) und das Stellglied (5) unter Zwischenschaltung der jeweiligen Elastomerschicht im Stützgehäuse (1) gelagert ist.

2. Stellelement nach Anspruch 1, **dadurch gekennzeichnet,** daß das Piezoelement (8) zumindest zwei in der Bewegungsrichtung des Stellgliedes (5) aufeinandergeschichtete Piezoelemente umfaßt.

3. Stellelement nach Anspruch 1 oder 2, dadurch gekennzeichnet, daß die Verformungseinheit (3) vollständig aus einem Elastomer besteht.

4. Stellelement nach Anspruch 3, **dadurch gekennzeichnet**, daß die Verformungseinheit (3) und das Stützgehäuse (1) einstückig verbunden sind.

5. Stellelement nach Anspruch 3 oder 4, **dadurch gekennzeichnet**, daß die Verformungseinheit (3) und das Stellglied (5) einstückig verbunden sind.

6. Stellelement nach Anspruch 3 bis 5, **dadurch gekennzeichnet**, daß die Verformungseinheit (3) und das Arbeitsglied (7) einstückig verbunden sind.

7. Stellelement nach Anspruch 1 bis 2, **dadurch gekennzeichnet**, daß der von den Elastomerschichten freie Teil des Raums (2) durch eine Flüssigkeit gebildet ist.

8. Stellelement nach Anspruch 7, **dadurch gekennzeichnet**, daß das Stellglied (5) und das Arbeitsglied (7) unter Zwischenschaltung der jeweiligen Elastomerschicht flüssigkeitsdicht im Stützgehäuse (1) gelagert sind.

9. Stellelement nach Anspruch 1 bis 8, **gekennzeichnet durch** die Verwendung in einem Schwingungstilger.

10. Stellelement nach Anspruch 1 bis 8, **gekennzeichnet durch** die Verwendung in einem Gummilager.

## Claims

1. An active actuator with a space (2) which is surrounded by an inflexible supporting housing (1) which is completely filled by an essentially incompressible deformation unit (3), the space (2) being bounded at a first location by at least one electrically actuable actuating element (5) and at a second location by at least one operating element (7), the actuating element (5) and the operating element (7) being movable backwards and forwards in the direction of the space (2) and being sealed off relative to the supporting housing (1), the deformation unit (3) surrounding the operating element (7), the actuating element (5) being movable backwards and forwards in the direction of the space by a piezoelectric element (8) and adjoining the deformation unit (3) with a hydraulically effective area which is larger than the corresponding hydraulically effective area of the operating element (7) , characterized in that the deformation unit (3) surrounds the actuating element (5), and that part of the space (2) in the supporting housing (1) in which the deformation unit (3) surrounds the operating element (7) and the actuating element (5) is filled with an elastomer layer in such a way that the operating element (7) and the actuating element (5) are supported in the supporting housing (1) via the respective elastomer layer.

2. An actuator according to claim 1, characterized in that the piezoelectric element (8) comprises at least two piezoelectric elements which are laid one on top of the other in the direction of motion of the actuating element (5).

3. An actuator according to either of claims 1 and 2, characterized in that the deformation unit (3) is composed completely of an elastomer.

4. An actuator according to claim 3, characterized in that the deformation unit (3) and the supporting housing (1) are integrally connected.

5. An actuator according to either of claims 3 and 4, characterized in that the deformation unit (3) and the actuating element (5) are integrally connected.

6. An actuator according any of claims 3 to 5, characterized in that the deformation unit (3) and the operating element (7) are integrally connected.

7. An actuator according to either of claims 1 and 2, characterized in that that part of the space (2) which is free of the elastomer layers is formed by a liquid.

8. An actuator according to claim 7, characterized in that the actuating element (5) and the operating element (7) are supported liquid-tightly in the supporting housing (1) via the respective elastomer layer.

9. An actuator according to any of claims 1 to 8, characterized by its use in a vibration absorber.

10. An actuator according to any of claims 1 to 8, characterized by its use in a rubber support.

## Revendications

1. Dispositif de positionnement actif comportant un espace (2) entouré d'un boîtier de support (1) inflexible, qui est intégralement rempli par une unité de déformation (3) essentiellement incompressible, l'espace (2) étant limité, à un premier endroit, par au moins un vérin (5) pouvant être actionné électriquement et, à un deuxième endroit, par au moins un élément de travail (7), l'élément de positionnement et l'élément de travail (5, 7) pouvant effectuer un mouvement de va-et-vient en direction de l'espace (2) et étant aussi rendus étanches par rapport au boîtier de support (1), l'unité de déformation (3) entourant l'élément de travail (7), l'élément de positionnement (7) pouvant effectuer un mouvement de va-et-vient en direction de l'espace grâce à un élément piézo-électrique (8), et étant adjacent à l'unité de déformation (3) par une surface hydrauliquement active, qui est plus grande que la surface hydrauliquement active correspondante de l'élément de travail (7), caractérisé en ce que l'unité de déformation (3) entoure l'élément de positionnement (5), et la partie de l'espace (2) situé dans le boîtier de support (1), dans laquelle l'unité de déformation (3) entoure l'élément de travail (7) et l'élément de positionnement (5), est remplie d'une couche élastomère de telle manière que l'élément de travail (7) et l'élément de positionnement (5) sont logés par intercalage de la couche élastomère respective dans le boîtier de support (1).

2. Dispositif de positionnement selon la revendication 1, caractérisé en ce que l'élément piézo-électrique (8) comprend au moins deux éléments piézo-électriques superposés l'un à l'autre dans le sens de déplacement de l'élément de positionnement (5).

3. Dispositif de positionnement selon la revendication 1 ou 2, caractérisé en ce que l'unité de déformation (3) se compose intégralement d'un élastomère.

4. Dispositif de positionnement selon la revendication 3, caractérisé en ce que l'unité de déformation (3) et le boîtier de support (1) sont liés solidairement.

5. Dispositif de positionnement selon la revendication 3 ou 4, caractérisé en ce que l'unité de déformation (3) et l'élément de positionnement (5) sont liés solidairement.

6. Dispositif de positionnement selon les revendications 3 à 5, caractérisé en ce que l'unité de déformation (3) et l'élément de travail (7) sont liés solidairement.

7. Dispositif de positionnement selon les revendications 1 à 2, caractérisé en ce que la partie, exempte de couches élastomères, de l'espace (2) est formée par un liquide.

8. Dispositif de positionnement selon la revendication 7, caractérisé en ce que l'élément de positionnement (5) et l'élément de travail (7) sont logés en étant étanches au liquide par intercalage de la couche élastomère respective dans le boîtier de support (1).

9. Dispositif de positionnement selon l'une des revendications 1 à 8, caractérisé par son utilisation dans un amortisseur d'oscillations.

10. Dispositif de positionnement selon l'une des revendications 1 à 8, caractérisé par son utilisation dans un logement en caoutchouc.
